## Europäisches Patentamt
## European Patent Office
## Office européen des brevets

(19)

(11) Numéro de publication: **0 058 098**
**B1**

(12)

# FASCICULE DE BREVET EUROPEEN

(45) Date de publication du fascicule du brevet:
18.07.84

(51) Int. Cl.³: **H 04 N 5/645**

(21) Numéro de dépôt: **82400048.3**

(22) Date de dépôt: **12.01.82**

(54) **Récepteur de télévision à moyens de centrage de l'écran dans l'ouverture de sa façade.**

(30) Priorité: **13.01.81 FR 8100474**

(43) Date de publication de la demande:
**18.08.82 Bulletin 82/33**

(45) Mention de la délivrance du brevet:
**18.07.84 Bulletin 84/29**

(84) Etats contractants désignés:
**DE GB IT NL**

(56) Documents cités:
**DE - B - 1 154 880**
**FR - A - 1 433 771**
**US - A - 2 165 779**

(73) Titulaire: **SOCIETE D'ELECTRONIQUE DE LA REGION PAYS DE LOIRE SEREL, 74, rue du Surmelin, F-75020 Paris (FR)**

(72) Inventeur: **Hascoet, Max, THOMSON-CSF SCPI 173, bld Haussmann, F-75360 Paris Cedex 08 (FR)**
Inventeur: **Pataillot, Georges, THOMSON-CSF SCPI 173, bld Haussmann, F-75360 Paris Cedex 08 (FR)**

(74) Mandataire: **Grynwald, Albert et al, THOMSON-CSF SCPI 173, Bld Haussmann, F-75379 Paris Cedex 08 (FR)**

## Description

L'invention est relative à un récepteur de télévision.

L'écran d'un téléviseur est constitué par la face avant d'un tube cathodique dont la plus grande partie est enfermée dans un boîtier dont la façade présente une large ouverture permettant la visibilité de l'écran.

Un téléviseur étant, bien entendu, la plupart du temps observé par sa façade on comprend aisément que l'esthétique de cell-ci doit être bien soignée. A cet égard il est habituellement admis que l'écran doit être centré par rapport à l'ouverture en façade. Cette condition est particulièrement critique lorsque, comme c'est le cas dans la plupart des téléviseurs, l'écran est en saillie à l'extérieur du boîtier, le bord de l'ouverture de la façade de ce boîtier entourant ainsi avec un certain jeu — nécessité par les dispersions des dimensions des tubes et des boitiers fabriqués en série — le rebord du tube à l'arrière de l'écran. En effet si le jeu n'est pas réparti de façon régulière le téléviseur est inesthétique.

Jusqu'à présent le positionnement du tube cathodique par rapport à la façade du boîtier du téléviseur est une opération qui nécessite un important temps de main d'oeuvre. En effet le montage s'effectue de la façon suivante: la façade du boîtier préalablement disposée horizontalement (face avant vers le bas) reçoit, par une opération manuelle ou automatique, la dalle du tube (partie avant) du téléviseur également présentée de façon horizontale vers le bas; dans ces conditions le jeu entre l'ouverture de la façade du boîtier et re rebord périphérique de l'écran n'est pratiquement pas visible pour l'opérateur; il faut alors, pour que ce jeu soit visible, modifier la position de l'ensemble façade du boîtier-tube cathodique et, si le centrage n'est pas correct, recommencer le montage qui est ainsi effectué par tâtonnements.

L'invention remédie à cet inconvénient.

Le récepteur de télévision selon l'invention, comportant un écran en saillie à l'extérieur de l'ouverture de la façade du boîtier du téléviseur avec un jeu entre le bord de l'ouverture et le rebord du tube à l'arrière de l'écran, ce tube présentant une ceinture, est caractérisé en ce qu'il comprend des organes élastiques agissant sur la ceinture afin que ledit jeu entre le bord de l'ouverture et le rebord du tube à l'arrière de l'écran soit régulier, et des moyens pour fixer la ceinture au boîtier.

Les moyens de centrage automatique peuvent ainsi être particulièrement simples.

Dans une réalisation les organes élastiques sont solidaires du boîtier.

De préférence ces organes élastiques agissent au voisinage des quatre coins — en général arrondis — de la ceinture de forme générale rectangulaire. Chaque organe élastique comprend par exemple une languette à laquelle est associée une languette analogue de manière telle que, lorsque le téléviseur est monté, ces deux languettes exercent des forces dont la résultante est sur une ligne à 45° avec les axes médians des côtés de la ceinture et passe le coin de cette ceinture de part et d'autre duquel sont disposées les deux languettes.

Avantageusement chaque organe élastique est solidaire d'une plaque qui, après montage, est en contact à coefficient de frottement élevé avec une oreille correspondante fixée à la ceinture du tube. De cette manière, à la fin du montage, le tube reste bien positionné par rapport à l'ouverture de la façade, le frottement élevé empêchant un déplacement relatif du tube et de la façade.

D'autres charactéristiques et avantages de l'invention apparaîtront avec la description de certains de ses modes de réalisation, celle-ci étant effectuée en se référant aux dessins ci-annexés sur lesquels:

— la fig. 1 est une vue de face d'un téléviseur,

— la fig. 2 est une vue en perpective, à plus grande échelle que celle de la fig. 1, d'une partie d'un téléviseur selon l'invention,

— la fig. 3 est un schéma montrant comment agissent les organes élastiques du téléviseur de la fig. 2,

— la fig. 4 est un schéma illustrant une étape du montage du boîtier du téléviseur,

— la fig. 5 est une vue analogue à celle de la fig. 4, pour une étape ultérieure du montage, et

— la fig. 6 est une vue en coupe d'un organe élastique selon l'invention.

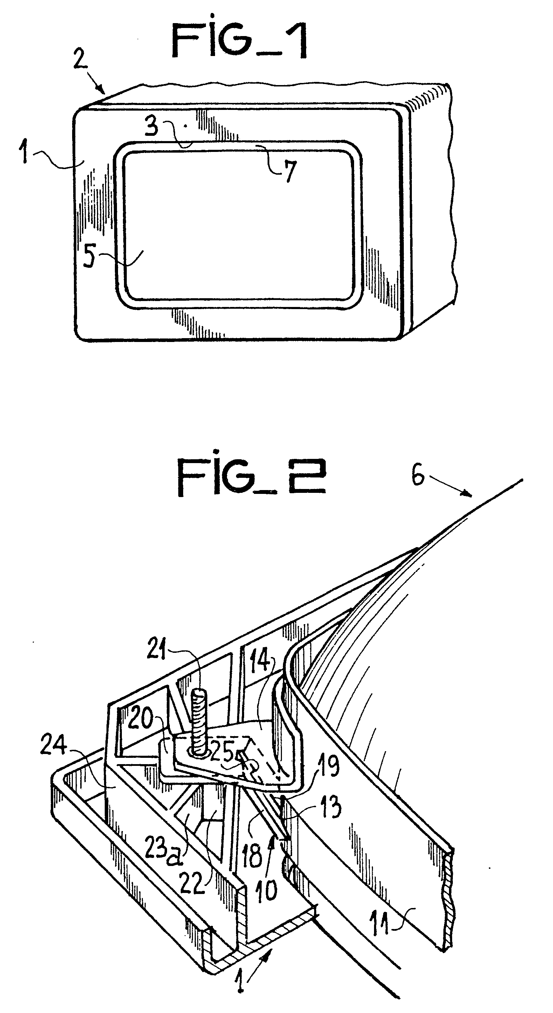

Dans l'exemple (fig. 1) la façade 1 du boîtier 2 du téléviseur est un élément qui ne forme pas une pièce d'un seul tenant avec le reste du boîtier.

Cette façade 1 présente une fenêtre 3 par laquelle sort la face bombée 4 (fig. 5) formant écran de la dalle 5 du tube cathodique 6 du téléviseur.

Selon l'invention on prévoit des moyens permettant, au cours du montage, de centrer automatiquement la dalle 5 par rapport à la fenêtre 3, c'est-à-dire d'obtenir un jeu régulier 7 entre la périphérie de l'écran et les bords de la fenêtre 3. Ces moyens permettent également de maintenir le centrage après le montage.

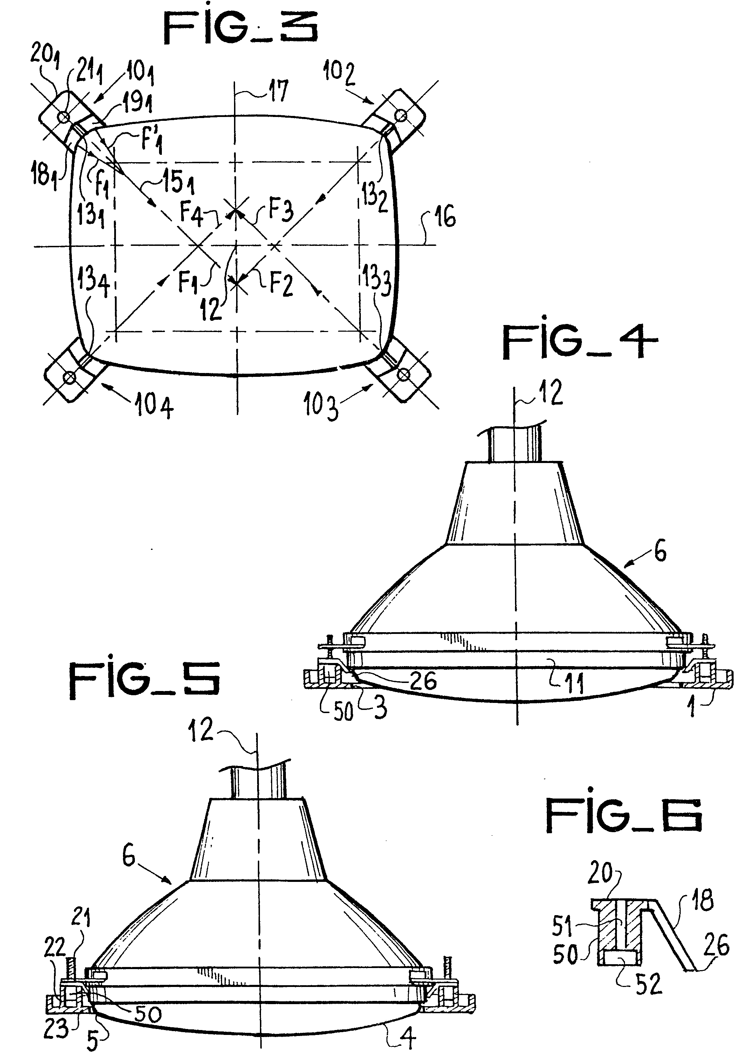

On prévoit à cet effet des languettes ou pattes élastiques 10 fixées à la façade 1 à l'intérieur du boîtier et appliquant d'abord sur la dalle, ensuite sur la ceinture 11 (fig. 2) du tube 6 des forces se trouvant dans un plan perpendiculaire à l'axe 12 tu tube (fig. 3, 4 et 5) et telles que le centrage correct est obtenu lorsque la résultante de ces forces est nulle.

La ceinture 11 est un élément métallique entourant le tube à l'arrière de la dalle et dont la section par un plan passant par l'axe 12 est formée de segments rectilignes parallèles à cet axe.

En section par un plan perpendiculaire à l'axe 12, la ceinture 11 a la forme générale d'un rectangle à côtés légèrement courbés et sommets $13_1$ à $13_4$ (fig. 3) arrondis. Cette ceinture est centrée par rapport à la dalle.

De la ceinture 11 sont en saillie, de façon en soi connue, à ses quatre coins, des oreilles 14 (fig. 2) pour la fixation de la ceinture, et donc du tube, à la façade 1.

Dans l'exemple, à chaque coin de la ceinture est associé un couple $10_1$, $10_2$, $10_3$, $10_4$ (fig. 3) de languettes élastiques qui, lorsque le téléviseur est monté, appliquent des forces dont la résultante est selon une ligne 15 passant par le sommet 13 correspondant de la ceinture et formant un angle de 45° avec chacun des axes médians, respectivement 16 et 17, des côtés de cette ceinture.

Chacun des ces couples comprend une première languette 18 à proximité du sommet 13 et une seconde languette 19 en position symétrique de celle de la languette 18 par rapport à la ligne 15 passant par le sommet 13 correspondant.

Les deux languettes 18 et 19 d'un même couple sont attachées élastiquement à une même plaque 20 fixée à la partie interne de la façade 1 et disposée dans un plan perpendiculaire à l'axe 12.

Dans l'exemple, de la plaque 20 dépend une saillie 50 de section irrégulière pénétrant dans une ouverture de section complémentaire d'un élément tubulaire (fig. 2, 5, 6) en saillie, vers l'intérieur, de la face avant 23 de la façade du boîtier.

La plaque 20 et la saillie 50 présentent une ouverture 51 pour le passage d'une vis 21 d'axe parallèle à l'axe 12 et traversant, après le montage, l'oreille 14 par l'ouverture que présente cette dernière. Le trou 51 se termine, à l'opposé de la plaque 20, par un lamage 52 constituant un logement de réception de la tête à six pans de la vis 21.

La partie de la plaque 20 autour de la saillie 50 est en appui contre le bord d'extrémité de l'élément tubulaire 22 et contre les bords libres de nervures $23_a$ (fig. 2) rattachant cet élément 22 à un rebord 24 de la façade.

Les irrégularités à la périphérie de la saillie 50 et les irrégularités complémentaires, en creux, de l'ouverture de la saillie 22 de la faćde empêchent la rotation de la plaque 20 et donc la rotation des languettes 18 et 19. De même, la forme complémentaire à six pans des têtes de vis 21 et du lamage 52 empêche la rotation de la vis par rapport à la plaque 20.

En variante la vis 21 coopère avec un taraudage du tube 22; ce taraudage peut être réalisé par la vis elle-même.

Les languettes 18 et 19 forment un angle obtus avec la plaque 20 et ont une direction telle qu'elles convergent vers l'avant du récepteur en s'éloignant de la plaque 20. Elles sont séparées l'une de l'autre par une fente 25. L'angle que forment entre eux les plans de ces deux languettes 18 et 19 est également obtus.

Chacune les languettes, par exemple celle de référence 18 (fig. 6), se termine par un biseau 26.

Avant le montage (fig. 4) les extrémités des languettes sont plus rapprochées de l'axe 12 que la périphérie de la ceinture 11. Ainsi lors du montage la ceinture écarte les languettes jusqu'à ce que les extrémités entrent en contact avec la surface périphérique de ladite ceinture. Les forces de rappel élastique qui résultent de cet écartement assurent le centrage automatique de l'écran par rapport à la façade 1.

Les forces mises en jeu lorsque le montage est réalisé sont représentées sur la fig. 3. La languette $18_1$ exerce sur la ceinture 11 une force $f_1$ et la languette $19_1$ exerce, de même, une force $f'_1$ de même valeur que la force $f_1$ et de direction symétrique par rapport à l'axe $15_1$. La résultante de ces deux forces $f_1$ et $f'_1$ est donc une force $F_1$ selon l'axe $15_1$.

La résultante des forces $F_1$, $F_2$, $F_3$ et $F_4$ est nulle après le montage.

Ce montage s'effectue de la façon suivante:

La façade 1 est disposée horizontalement sa partie interne dirigée vers le haut. Le tube 6 est alors présenté avec son axe 12 vertical, la dalle 5 vers le bas, en face de la fenêtre 3. Les oreilles 14 assurent, par coopération avec les vis 21, un centrage préliminaire par rapport à la façade.

Le tube est laché lorsqu'il est très proche des languettes ou entre en contact avec celles-ci. Ce tube n'étant plus retenu, soit par la main, soit par un dispositif automatique qui pourraient exercer sur lui des forces horizontales défavorables au centrage, il acquiert la position voulue grâce à son propre poids et aux forces élastiques exercées par les languettes. La fixation du tube à la façade du boîtier est assurée par des écrous (non représentés) coopérant avec les vis 21 de façon à serrer les oreilles 14 contre les plaques 20. Les faces destinées à être en contact l'une contre l'autre de chaque plaque 20 et de l'oreille correspondante ont des états de surface tels que le coefficient de frottement entre ces surfaces est élevé de manière à contribuer au maintien du tube par rapport à la façade 1 di boîtier du téléviseur.

Les languettes et la plaque à laquelle elles sont rattachées élastiquement sont par exemple en matière plastique.

L'invention s'applique à tout type de téléviseur, sans modification importante de ce dernier.

## Revendications

1. Récepteur de télévision comportant un écran (4) en saillie à l'extérieur de l'ouverture (3) de la façade (1) du boîtier (2) du téléviseur avec un jeu entre le bord de l'ouverture et le rebord du tube à l'arrière de l'écran, ce tube présentant une ceinture (11), caractérisé en ce qu'il comprend des organes élastiques (10) agissant sur la ceinture (11) afin que ledit jeu entre le bord de l'ouverture et le rebord du tube à l'arrière de l'écran soit régulier, et des moyens pour fixer la ceinture au boîtier.

2. Récepteur de télévision selon la revendication 1, caractérisé en ce que les organes élastiques (10) sont solidaires de la façade (1) du boîtier (2).

3. Récepteur de télévision selon la revendication 2, caractérisé en ce que chaque organe élastique comporte deux languettes (18, 19) rattachées élastiquement à un corps (20) solidaire du boîtier du récepteur.

4. Récepteur de télévision selon la revendication 3, caractérisé en ce que les languettes sont disposées au voisinage des coins (13) de la ceinture (11).

5. Récepteur de télévision selon la revendication 4, caractérisé en ce que deux languettes (18, 19) sont disposées de part et d'autre de chaque coin (13).

6. Récepteur de télévision selon la revendication 5, caractérisé en ce que les deux languettes (18, 19) disposées de part et d'autre du même coin (13) de la ceinture sont rattachées élastiquement à un même corps (20).

7. Récepteur de télévision selon la revendication 5 ou 6, caractérisé en ce que les deux languettes disposées de part et d'autre du même coin (13) de la ceinture sont disposées symétriquement par rapport à un axe à 45° par rapport aux axes médians (16, 17) de l'écran.

8. Récepteur de télévision selon l'une quelconque des revendications 3 à 7, caractérisé en ce que le corps (20) auquel est rattachée élastiquement au moins une languette (18, 19) comprend une plaque qui, après le montage, est appliquée contre une oreille (14) fixée à la ceinture.

9. Récepteur de télévision selon la revendication 8, caractérisé en ce que chaque plaque (20) présente une surface dont le coefficient de friction avec la surface de l'oreille correspondante (14) avec laquelle elle est en contact après le montage est élevé de manière à contribuer au maintien de ce montage.

10. Récepteur de télévision selon l'une quelconque des revendications 3 à 9, caractérisé en ce que chaque languette (18, 19) est de direction oblique par rapport à l'axe (12) du tube (6).

11. Récepteur de télévision selon la revendication 3, caractérisé en ce que la languette et le corps auquel elle est rattachée élastiquement sont en matière plastique.


**Patentansprüche**

1. Fernsehempfänger mit einem Bildschirm (4), der aus der Öffnung (3) der Vorderseite (1) des Gehäuses (2) des Fernsehers mit einem Spiel zwischen dem Rand der Öffnung und dem Rand der Röhre auf der Rückseite des Bildschirms heraussteht, wobei diese Röhre mit einem Band (11) versehen ist, dadurch gekennzeichnet, daß er elastische Elemente (10) enthält, welche auf das Band (11) so einwirken, daß das genannte Spiel zwischen dem Rand der Öffnung und dem Rand der Röhre auf der Rückseite des Bildschirms gleichmäßig ist, und Mittel zur Befestigung des Bandes am Gehäuse aufweist.

2. Fernsehempfänger nach Anspruch 1, dadurch gekennzeichnet, daß die elastischen Elemente (10) fest mit der Vorderseite (1) des Gehäuses (2) verbunden sind.

3. Fernsehempfänger nach Anspruch 2, dadurch gekennzeichnet, daß jedes elastische Element zwei Laschen (18, 19) enthält, die elastisch mit einem Körper (20) verbunden sind, welcher fest mit dem Gehäuse des Empfängers verbunden ist.

4. Fernsehempfänger nach Anspruch 3, dadurch gekennzeichnet, daß die Laschen in der Nähe der Ecken (13) des Bandes (11) angeordnet sind.

5. Fernsehempfänger nach Anspruch 4, dadurch gekennzeichnet, daß zwei Laschen (18, 19) auf der einen bzw. anderen Seite jeder Ecke (13) angeordnet sind.

6. Fernsehempfänger nach Anspruch 5, dadurch gekennzeichnet, daß die beiden Laschen (18, 19), die auf der einen bzw. auf der anderen Seite derselben Ecke (13) des Bandes angeordnet sind, elastisch mit demselben Körper (20) verbunden sind.

7. Fernsehempfänger nach Anspruch 5 und 6, dadurch gekennzeichnet, daß die beiden auf der einen bzw. auf der anderen Seite derselben Ecke (13) des Bandes angeordneten Laschen symmetrisch in bezug auf eine Achse angeordnet sind, die unter 45° zu den Mittellinien (16, 17) des Bildschirmes verläuft.

8. Fernsehempfänger nach einem der Ansprüche 3 bis 7, dadurch gekennzeichnet, daß der Körper (20), mit welchem wenigstens eine Lasche (18, 19) elastisch verbunden ist, eine Platte aufweist, die nach der Montage gegen einen an dem Band befestigten Flügel (14) angelegt ist.

9. Fernsehempfänger nach Anspruch 8, dadurch gekennzeichnet, daß jede Platte (20) eine Oberfläche aufweist, deren Reibungskoeffizient mit der Oberfläche des entsprechenden Flügels (14), mit der sie nach der Montage in Kontakt ist, groß ist, so daß er zur Sicherung dieser Montage beiträgt.

10. Fernsehempfänger nach einem der Ansprüche 3 bis 9, dadurch gekennzeichnet, daß jede Lasche (18, 19) schräg zur Achse (12) der Röhre (6) angeordnet ist.

11. Fernsehempfänger nach Anspruch 3, dadurch gekennzeichnet, daß die Lasche und der Körper, an dem sie elastisch befestigt ist, aus Plastikmaterial sind.


**Claims**

1. Television receiver having a screen (4) projecting outside the opening (3) of the front (1) of the housing (2) of the television receiver with a gap between the edge of the opening and the edge of the tube behind the screen, this tube having a belt (11), characterized in that it comprises resilient members (10) acting upon the belt (11) in a manner to cause the gap between the edge of the opening and the edge of the tube behind the screen to be uniform, and means for securing the belt to the housing.

2. Television receiver according to claim 1, characterized in that the resilient members (10) are joined with the front (1) of the housing (2).

3. Television receiver according to claim 2, characterized in that each resilient member comprises two straps (18, 19) resiliently affixed to a body (20) joined with the housing of the receiver.

4. Television receiver according to claim 3, characterized in that the straps are arranged in the neighborhood of the corners (13) of the belt (11).

5. Television receiver according to claim 4, characterized in that the two straps (18, 19) are arranged in both sides of each corner (13).

6. Television receiver according to claim 5, characterized in that the two straps (18, 19) arranged on both sides of the same corner (13) of the belt are resiliently affixed to the same body (20).

7. Television receiver according to claim 5 or 6, characterized in that the two straps arranged on both sides of the same corner (13) of the belt are arranged symmetrically with respect to an axis lying at 55° with respect to the median axes (16, 17) of the screen.

8. Television receiver according to any of claims 3 to 7, characterized in that the body (20) to which at least one strap (18, 19) is resiliently affixed comprises a plate which, after the mounting, is applied against a lug (14) affixed to the belt.

9. Television receiver according to claim 8, characterized in that each plate (20) has a surface the friction coefficient of which with the surface of the corresponding lug (14) which it is contacting after the mounting is high in order to contribute to maintain said mounting.

10. Television receiver according to any of claims 3 to 9, characterized in that each strap (18, 19) has a direction which is oblique with respect to the axis (12) of the tube (6).

11. Television receiver according to claim 3, characterized in that the strap and the body to which it is resiliently affixed are of plastics material.

# FIG_1

# FIG_2

# FIG_3

$20_1$ $21_1$ $10_1$
$19_1$
$102$
17
$F'_1$
$18_1$
$f_1$
$15_1$
$132$
$131$
$F4$ $F3$
16
$134$
$F_1$
12 $F2$
$133$
$104$
$103$

# FIG_4

12
6
26
11
50 3
1

# FIG_5

12
6
21
22
50
23 5
4

# FIG_6

20
51
50
18
26
52